Europäisches Patentamt

European Patent Office

Office européen des brevets

(19)

(11) Veröffentlichungsnummer: **0 189 741**
**B1**

(12) **EUROPÄISCHE PATENTSCHRIFT**

(45) Veröffentlichungstag der Patentschrift: 26.09.90

(21) Anmeldenummer: 85890270.3

(22) Anmeldetag: 29.10.85

(51) Int. Cl.⁵: **G 01 N 27/30**

(54) Ionensensitive Membranelektrode.

(30) Priorität: 31.01.85 AT 276/85

(43) Veröffentlichungstag der Anmeldung:
06.08.86 Patentblatt 86/32

(45) Bekanntmachung des Hinweises auf die
Patenterteilung:
26.09.90 Patentblatt 90/39

(84) Benannte Vertragsstaaten:
DE GB IT

(56) Entgegenhaltungen:
EP-A-0 115 346
DE-A-3 000 886
SU-A-1 097 928

MIKROCHIMICA ACTA, 1978, Seiten 235-246, K.
HARTMAN et al.: "Chloride-selective liquid-
membrane electrodes based on lipophilic
methyl-tri-N-alkyl-ammonium compounds and
their applicability to blood serum
measurements"

(73) Patentinhaber: AVL Medical Instruments AG
Stettemerstrasse 28
CH-8207 Schaffhausen (CH)

(72) Erfinder: Ritter, Christoph, Dr.
Radegunderstrasse 30
A-8045 Graz (AT)
Erfinder: Ghahramani, Massoud, Dr.
Eduard Keil-Gasse 82/1
A-8041 Graz (AT)
Erfinder: Marsoner, Hermann, Dipl.-Ing. Dr.
Roseggersiedlung 2
A-8153 Steinberg (AT)

(74) Vertreter: Krause, Walter, Dr. Dipl.-Ing. et al
Postfach 200 Singerstrasse 8
A-1010 Wien (AT)

(56) Entgegenhaltungen:

J.G. SCHINDLER et al.: "Bioelektrochemische
Membranelektroden, 1983, Seiten 107-109,
Walter de Gruyter, Berlin

ANALYTICAL CHEMISTRY, Band 53, Nr. 4, April
1981, Seiten 588-593; S. OKA et al.: "Direct
potentiometric determination of chloride ion in
whole blood"

**Beschreibung**

Die Erfindung betrifft eine ionensensitive, insbesonders Chlorid-empfindliche, Membranelektrode, mit einer anionenempfindlichen Membran, welche in einer weichmacherfreien Polymermatrix eingelagert zumindest eine elektroaktive Komponente aufweist.

Ionensensitive Elektroden sind Sensoren, die selektiv auf Ionen ansprechen, in dem der bevorzugte Ladungstransfer eines bestimmten Ions der Probe bzw. Probenlösung in die Membranphase und die damit zusammenhängende Änderung des elektrochemischen Potentials ausgenutzt wird. Derartige ionenselektive Elektroden werden in großem Umfang zur Messung von Ionen selbst in unverdünnten Körperflüssigkeiten angewandt, da diese Meßmethodik große Vorteile bietet.

Derartige ionensensitive Elektroden sind in der Fachliteratur eingehend beschrieben. So gibt beispielsweise das Buch von Karl Cammann mit dem Titel "Das Arbeiten mit ionenselektiven Elektroden" Springer-Verlag, Berlin, Heidelberg, New York (1973) einen umfassenden Überblick über die Grundlagen und Ausführungsformen verschiedenster ionensensitiver Elektroden für unterschiedlichste Anwendungen, auch auf dem Gebiet der Anwendung von ionensensitiven Elektroden zur Analyse von Ionen.

Auch im Zusammenhang mit der Messung in biologischen Flüssigkeiten existiert eine umfangreiche Fachliteratur, für welche hier stellvertretend das Buch von Jiři Koryta mit dem Titel "Medical and biological application of electrochemical devices", John Wiley and Sons, New York, (1980), genannt werden kann.

Während eine große Zahl von kationensensitiven derartigen Elektroden bereits sein Jahren für praktische analytische Anwendungen im Einsatz ist, bereitet die Entwicklung von anionensensitiven Sensoren in Form von ionenselektiven Elektroden nach wie vor Schwierigkeiten. Unter denjenigen Anionen, welche etwa in biologischen Flüssigkeiten routinemäßig analysiert werden, nimmt das Chlorid die dominierende Position ein. Chlorid ist jenes Anion, das in der Extrazellulärflüssigkeit und damit auch im Blutserum mit einer Konzentration von ca. 0,1 mol/l am stärksten vertreten ist. Zusammen mit dem Bicarbonation, das üblicherweise über die Gesamt-CO2-Menge bestimmt wird, macht es den überwiegenden Anteil der Anionenbilanz aus.

Der Versuch, Chlorid in Blut, Blutserum, Blutplasma und Harn mit ionensensitiven Elektroden zu messen, geht bereits auf die Zeit der ersten überhaupt beschriebenen ionensensitiven Sensoren zurück. Ursprünglich hatte man versucht, die bekannten "Halogenidmembranelektroden" zu diesem Zweck zu verwenden. Solche Elektroden sind in bekannter Weise aus einem festen Silberkörper mit darüber elektrolytisch aufgebrachter Silberchlordischichte aufgebaut. Nach elektrochemischen Gesetzen ist ein derartiges Gebilde eine für Chloridionen reversible Elektrode, deren Potential der Nernst'schen Gleichung folgt. In der Tat kann eine derartige Elektrode gemeinsam mit einer geeigneten Referenzelektrode zur Messung von Chlorid in wäßrigen Lösungen herangezogen werden. Beim Kontakt mit biologischen Flüssigkeiten ergeben sich allerdings eine Reihe von unerwünschten Interferenzen und Störreaktionen, die dazu führen, daß die Meßergebnisse nicht nur zum Teil grob verfälscht werden, sondern daß auch die Elektrode nach relativ kurzer Zeit unbrauchbar wird.

Als eine erfolgreichere Gruppe von ionenselektiven Elektroden für die Messung insbesondere von Chlorid haben sich die sogenannten Flüssigkeitsmembranelektroden erwiesen. Ihr bestimmendes und charakteristisches Bauelement ist eine ionensensitive Membran, die im wesentlichen aus einer Lösung einer elektroaktiven Komponente innerhalb einer geeigneten Membranmatrix besteht, wobei die elektroaktive Komponente für das zu messende Ion sensitiv ist. Während früher derartige elektroaktive Komponenten in porösen Materialien, wie etwa kleinen Scheibchen von inertem Filtermaterial, aufgesaugt waren, wird seit den grundlegenden Arbeiten von Moody, Oke und Thomas (wie beschrieben in: "A calcium sensitive elektrode based on a liquid ion exchanger in a Polyvinyl chloride matrix", Analyst, 95, 910 f (1970) als Membranmatrixmaterial vorwiegend PVC mit einem im allgemeinen hohen Weichmachergehalt angewandt.

Aufgrund dieser bekannten Tatsachen ist es nicht weiter verwunderlich, daß eine große Anzahl von Veröffentlichungen und Patentliteratur anionensensitive Elektroden für die Messung von Chlorid beschreibt, die aus folgenden Grundkomponenten bestehen:

1) einer Lösung eines Polymers (insbesonders PVC) in einem geeigneten Lösungsmittel wie beispielsweise Tetrahydrofuran oder Cyclohexanon

2) einer elektroaktiven Substanz, die die mehr oder weniger selektive Wechselwirkung mit dem Chloridion der Lösung ermöglicht.

3) einem Weichmacher in hoher Konzentration (d.h. hohem prozentualen Anteil am Gewicht der Membran), der der Membran eine weiche Konsistenz gibt und den elektrischen Widerstand derartiger Kunststoffmembranen auf brauchbare Werte von einigen 100 Megaohn reduziert.

Als elektroaktive Komponenten wurden bei den bekannten Anordnungen hauptsächlich quarternäre Ammoniumverbindungen in Form des Chlorids oder auch quarternäre Phosphoniumchloride angewandt. Durch Untersuchungen, beispielsweise von K. Hartman et al: "Chloride-Selektive Liquid-Membrane Electrodes Based on Lipophilic Methyl-Tri-N-Alkyl-Ammonium Compounds and their Applicability to Blood Serum Measurements", veröffentlicht in: Microcimica Acta, Seite 235—246 (1978), weiß man, daß es vorteilhaft ist, derartige quarternäre Verbindungen in einer solchen Form anzuwanden, daß diese durch angebundene Alkylketten geeigneter Kettenlänge eine hohe Lipophilie erreichen und dadurch in Kontakt mit wäßrigen Lösungen oder solchen Lösungen, die ebenfalls einen gewissen Gehalt an lipophilen Stoffen zeigen, wie Blut und Blutserum, trotzdem aufgrund eines hohen Verteilungskoeffizienten zugunsten der Membran, vorzugsweise in der Membran bleiben und nicht in die Probe austreten.

Während bei bekannten früheren Ausführungsformen von chloridsensitiven Flüssigkeitsmembranelektroden als elektroaktive Komponente das bekannte industrielle Produkt "Aliquat 336" angewandt wurde, welches wahrscheinlich ein Methyltricaprylcylammoniumchlorid ist, hat sich durch die oben zitierten Untersuchungen eindeutig gezeigt, daß als elektroaktive Komponente die Verbindung Methyltridodecylammoniumchlorid Vorteil bietet. Diese Vorteile bestehen darin, daß diese Verbindung neben der Methylgruppe durch 3 Dodecylgruppen eine hohe Lipophilie besitzt. Obwohl in der weiteren Folge in der Fachliteratur häufig diese eine Verbindung zitiert wird, besteht in bezug auf die vorliegende Erfindung keine Notwendigkeit, ausschließlich diese spezielle Verbindung als elektroaktive Komponente anzuwenden. Jede analog gebaute quarternäre Ammonium- oder Phosphoniumhalogenidverbindung, die durch entsprechende Seitengruppen ausreichende Lipophilie zur Erzielung einer praktisch ausreichenden hohen Membranlebensdauer hat, ist prinzipiell für den vorgesehenen Zweck anwendbar.

Die bekannten Membranen sind im wesentlichen also so aufgebaut, daß ein bestimmter Prozentsatz der elektroaktiven Komponente gemeinsam mit PVC und einer Weichmachersubstanz in einem geeigneten Lösungsmittel gelöst ist. Aus diesem Lösungsgemisch wird durch Verdampfen des Lösungsmittels eine im allgemeinen starre, transparente Membran bestimmter, vorgegebener Geometrie gegossen. Typische Ausführungen von in der Fachliteratur als vorteilhaft beschriebenen Membranen enthalten z.B. ca. 29 Gewichtsprozent PVC, 65 Gewichtsprozent eines Weichmachers, wie beispielsweise Orthonitrophenyloctyläther oder Dinitrobutylphtalat oder ähnliche, und etwa 6% des Membrangewichts an elektroaktiver Komponente, wie beispielsweise Methyltridodecylammoniumchlorid.

Die Angaben über die bekannten Membranzusammensetzungen schwanken in verschiedenen Literaturstellen bzw. Patentschriften. So gibt z.B. das US-Patent 4 349 426 eine Konzentration von Methyltridodecylammoniumchlorid zwischen 10 und 20 Gewichtsprozent, weiters eine Konzentration des Weichmachers n-Tetradecylalkohol zwischen 20 und 40 Gewichtsprozent und einer restlichen Konzentration an PVC zwischen 40 und 60 Gewichtsprozent an. Die DE—OS—30 00 886 zitiert eine Membranzusammensetzung bestehend aus 20 bis 24 Gewichtsprozent Methyltridodecylammoniumchlorid, 5 bis 15 Gewichtsprozent Phenylalkylalkohol als Weichmacher und 60 bis 79 Gewichtsprozent Polyvinylchlorid in Tetrahydrofuran gelöst.

Allen bisher bekannten Membranzusammensetzungen ist folgendes gemeinsam: Die Membran besteht, wie bereits oben angeführt, aus mindestens 3 Grundkomponenten; diese sind:

1) PVC oder ein anderes für derartige Zwecke geeignetes bekanntes Polymermaterial, wie beispielsweise Polycarbonat, Polymethylacrylat oder Siliconkautschuk, als Membranmaterial.

2) Eine elektroaktive Komponente aus der Gruppe der Tetraalkylammoniumchloride oder Tetraalkylphosphoniumchloride.

3) Ein varrierender Prozentsatz eines geeigneten Weichmachers für das Matrixpolymer mit einem meist sehr hohen Prozentanteil.

Lediglich in der bereits oben zitierten Veröffentlichung von K. Hartman et al werden 2 Membranzusammensetzungen angegeben, die gegenüber den genannten etwas unterschiedlich sind. Es sind dies eine erste Membranzusammensetzung, bei der der Weichmacher 5-Phenyl-1-Pentanol lediglich in einem Ausmaß von 10 Gewichtsprozenten angewandt wird und eine weitere Ausführung, die auf Weichmacher gängzlich verzichtet und aus lediglich 18 Gewichtsprozenten Methyltridodecylammoniumchlorid und 82% PVC besteht. Diese letztere Membranzusammensetzung wird als funktionierende Membran, jedoch nicht als vorteilhafte Ausführungsform dargestellt.

Bei der Anwendung von ionensensitiven, insbesonders chloridsensitiven Elektroden dieses Typs ergeben sich in Kontakt mit biologischen Flüssigkeiten, insbesondere mit Blutserum und Harn, Probelem, die zu Verfälschungen der Meßwerte führen, durch Interferenzen, die durch die Anwesenheit anderer Anionen hervorgerufen werden. Insbesondere störend sind lipophile Anionen, wie sie beispielsweise in Form von Rhodanid (SCN) im Harn von starken Rauchern in durchaus nennenswertem Ausmaß vorhanden sein können.

Selektivitätabellen für eine Reihe von verschiedenen Anionen können aus der oben zitierten Literaturstelle von K. Hartman et al entnommen werden. Darüberhinaus ist es wichtig, daß derartige Elektroden auch nicht auf Anionen von Substanzen ansprechen, die zu therapeutischen Zwekken verabreicht werden. Hier sind insbesondere Bromid, Salizylat und Ascorbat zu nennen.

Bei der Anwendung der bisher bekannten derartigen Membranelektroden haben sich auch, besonders in unverdünnten Harnproben, Interferenzen ergeben, deren eigentlich auslösende Ursache bis heute nicht bekannt ist. Auch in verdünnten Harnproben sind derartige Interferenzen gefunden worden.

Es ist in diesem Zusammenhang auch anzumerken, daß auch Gemische von zwei oder mehreren elektroaktiven Komponenten unterschiedlicher Bauart aus der übergeordneten Gruppe der quaternären Ammonium- oder Phosphoniumchloride zu keinerlei Verbesserung geführt haben. Gewisse Interferenzen konntten dadurch verbessert werden, daß man die ionensensitiven Flüssigkeitsmembranen mit hydrophilen ionenpermeablen Schutzmembranen überzogen hat. Diese Schutzmembranen wurden dabei beispielsweise aus Zellophan, Cuprophan oder einem geeigneten Celluloseester, oder einem Gemisch von derartigen Celluloseestern hergestellt. Tortzdem konnte keine befriedigende, interferenzfreie Messung in jedem Fall gewährleistet werden.

Ferner ist zu bedenken, daß allgemein bei Verwendung von Ionentauschersalzen wie es z.B. die erwähnten quarternären Ammoniumchloride sind, eine gewisse Selektivitätssequenz gegenüber Störionen gegeben ist. Durch Weichmacherzusätze, Membranüberziehungen etc. kann diese Sequenz nicht prinzipiell verändert werden, sondern es kann nur der Bereich, den die Konstanten einnehmen, insgesamt verändert werden. Dies bedeutet, daß bei Verringerung der Störionenaktivität der Ionen mit Selektivitätskonstanten K größer 1 gleichzeitig die Selektivität gegenüber Störionen mit Selektivitätskonstanten K kleiner 1 verschlechtert wird.

Aufgabe der vorliegenden Erfindung ist es, eine ionensensitive Membranelektrode der eingangs genannten Art so auszubilden, daß das selektive Verhalten dem nachzuweisenden Ion gegenüber verbessert werden kann, ohne daß die genannten Nachteile der bekannten Ausführungen in Kauf genommen werden müssen. Insbesonders soll auf einfache Weise eine Chlorid-empfindliche Membranelektrode mit hoher Selektivität gegenüber anderen Anionen sowie sonstigen lipophilen Ionen des Blutes und anderen Interferenzstoffen in Körperflüssigkeiten geschaffen werden.

Dies wird gemäß der vorliegenden Erfindung dadurch erreicht, daß der Anteil an elektroaktiver Komponente in der Membran im Bereich von 50 bis 90 Gewichtsprozent liegt. Diese Ausbildung macht sich die völlig überraschende Tatsache zunutze, daß das selektive Verhalten der eingangs beschriebenen Flüssigkeitsmembranen drastisch verbessert werden kann, wenn man in der Polymermatrix gänzlich auf die beim bekannten Stand der Technik verwendeten Weichmachersubstanzen verzichtet und dafür den Gehalt an elektroaktiver Komponente drastisch auf über 50 Gewichtsprozentanteile erhöht.

Insbesonders im Zusammehang mit einer Membranelektrode mit PVC als Polymermatrix und Methyltridodecylammoniumchlorid als elektroaktive Komponente hat sich gemäß einer besonders bevorzugten Ausbildung der Erfindung ein Anteil an elektroaktiver Komponente in der Membran im Bereich von 60 bis 80 Gewichtsprozent als besonders vorteilhaft erwiesen.

Die Ausbildung der anionenempfindlichen Membran gemäß der vorliegenden Erfindung stellt gegenüber den bekannten Ausführungen und auch im Hinblick auf die in der zitierten Veröffentlichung von K. Hartman et al als nicht vorteilhafte Ausführungsform dargestellte weichmacherfreie Membran die Überwindung eines Vorurteils der Fachwelt dar, wobei der Zeit über die theoretische Begründung des die erfindungsgemäßen Vorteile ergebenden Mechanismus nur vage Vermutungen existieren.

Die unerwarteten Eigenschaften bzw. Vorteile von erfindungsgemäßen ionensensitiven Membranelektroden sind aus der untenstehenden Tabelle 1 durch den Vergleich der Selektivität bzw. Interferenzen von einer Anzahl von Anionen gegenüber Chlorid für drei verschiedene Membranzusammensetzungen ersichtlich.

Diese Membranzusammensetzungen sind:

1) eine konventionelle Elektrodenmembran mit Weichmacher (z.B. 27 Gewichtsprozent Methyltridodecylammoniumchlorid (MTDDAC1), 5 Gewichtsprozent 2-Nitroparacymol und 5 Gewichtsprozent 5-Phenyl-1-Pentanol als Weichmacher und 63 Gewichtsprozent PVC)

2) eine weichmacherfreie Membran mit 80 Gewichtsprozenten PVC und 20 Gewichtsprozenten Tridodecylammoniumchlorid, entsprechend der angesprochenen Offenbarung von K. Hartman et al

3) eine Membran nach der vorliegenden Erfindung bestehend aus 80 Gewichtsprozenten Tridodecylammoniumchlorid und 20 Gewichtsprozenten PVC.

Die Selektivitätskonstante ist dabei in allen Fällen nach einer unter der Bezeichnung FIM (fixed interference method) bekannten Meßmethode bestimmt.

### TABELLE 1
Typische Selektivitätsdaten verschiedener Membranzusammensetzungen
(angegeben im Logarithmus der Selektivitätskonstante)

| Ion | Membran 1 | Membran 2 | Membran 3 |
|------|-----------|-----------|-----------|
| $ClO_4$ | — | 3,7 | 0,6 |
| I | 1,77 | — | 0,32 |
| $NO_3$ | 1,0 | 1,6 | 0,56 |
| Br | 0,62 | 1,0 | 0,19 |
| $NO_2$ | 0,65 | 0,7 | 0,51 |
| $HCO_3$ | −1,17 | −1,0 | −0,045 |

Die in dieser Tabelle 1 angegebenen Selektivitätsdaten weisen bereits darauf hin, daß es Ionen gibt, für die die erfindungsgemäß ausgebildete Membranelektrode höhere Selektivität aufweist als für das Chlorid. In entsprechenden Meßmedien kann daher eine erfindungsgemäß ausgebildete ionensensitive Membranelektrode durchaus auch für die Messung anderer Ionen verwendet werden, so z.B. $ClO_4$, SCN, Jodid, $NO_3$, Bromid. Die dabei erzielbaren Vorteile sind abhängig von der speziellen Zusammensetzung der zu messenden Lösung. In physiologischen Lösungen ist aufgrund der Konzentrationsverhältnisse der einzelnen Ionen mit einer erfindungsgemäß ausgebildeten Membranelektrode vorzugsweise Chlorid meßbar.

In diesem Zusammenhang ist auch noch darauf hinzuweisen, daß erfindungsgemäß ausgebildete ionensensitive Membranelektroden auch mit für verschiedenste Zwecke vorteilhaften geladenen elektroaktiven Komponenten ohne weiteres ausführbar sind. Der elektrische Widerstand der erhaltenen Membran ist relativ niedrig (im Bereich von 0,1 bis 1 Megaohm), was die praktische Verwendung der Membranelektrode zur Durchführung von Messungen erleichtert und wahrscheinlich auf die in der Membran vorhandene, relativ hohe elektrische Ladungsdichte zurückzuführen ist.

Die Vorteile der erfindungsgemäßen Elektroden sind weiters auch aus dem Vergleich von Chlorid-Messungen an Harnproben deutlich ersichtlich.

In Tabelle 2 sind die Ergebnisse der Untersuchung von 5 Harnproben jeweils einerseits nach dem bekannten Verfahren der "Colorimetrie" und andererseits mit einer konventionellen Elektrodenmembran mit Weichmacher (Membran 1 aus Tabelle 1) auf Chlorid angeführt. Die Harnproben werden bei der Colorimetrie unverdünnt eingegeben; die erforderliche Verdünnung wird vom Gerät selbsttätig durchgeführt. Mit der "Membran 1" war eine sinnvolle Messung an unverdünntem Harn unmöglich, dadurch Störioneneinfluß starkes Driften auftritt—es erfolgte daher eine Verdünnung der Proben (2 Teile Verdünner/1 Teil Harn)

TABELLE 2

| Probe | Colorimetrie | Membran 1 |
|-------|--------------|-----------|
| 1 | 66 m mol/l | 347 m mol/l |
| 2 | 85 m mol/l | 95 m mol/l |
| 3 | 99 m mol/l | 154 m mol/l |
| 4 | 136 m mol/l | 309 m mol/l |
| 5 | 176 m mol/l | 228 m mol/l |

Die deutlich sichtbaren großen Unterschiede in den Messwerten nach den beiden Methoden würden bei Messungen an unverdünnten Proben mit der Membran 1 noch wesentlich größer.

In Tabelle 3 ist der Vergleich zwischen Colorimetrie-Messung und einer weichmacherfreien Elektrodenmembran (Membran 2 in Tabelle 1) dargelegt.

TABELLE 3

| Probe | Colorimetrie | Membran 2 |
|-------|--------------|-----------|
| 1 | 16 m mol/l | 1117 (617) m mol/l |
| 2 | 43 m mol/l | 86 m mol/l |
| 3 | 79 m mol/l | 119 m mol/l |
| 4 | 91 m mol/l | 130 m mol/l |
| 5 | 119 m mol/l | 400 m mol/l |

Auch hier ist wiederum für die Messung mit der Membran 2 eine Verdünnung der Probe im Verhältnis 2:1 vorgenommen worden.

# EP 0 189 741 B1

In Tabelle 4 ist schließlich der obige Vergleich mit einer erfindungsgemäßen Elektrodenmembran (Membran 3 in Tabelle 1) angestellt.

TABELLE 4

| Probe | Colorimetrie | Membran 3 |
|-------|--------------|-----------|
| 1 | 39 m mol/l | 43 m mol/l |
| 2 | 70 m mol/l | 75 m mol/l |
| 3 | 91 m mol/l | 93 m mol/l |
| 4 | 170 m mol/l | 169 m mol/l |
| 5 | 233 m mol/l | 241 m mol/l |

Aus diesem Vergleich ist unmittelbar ersichtlich, daß die Chlorid-Messung mit einer erfindungsgemäß ausgebildeten Membranelektrode auch an unverdünntem Harn durchgeführt werden kann ohne daß—wie bei den bekannten Membranelektroden—signifikante Abweichungen in den Messwerten auftreten.

**Patentansprüche**

1. Ionensensitive, insbesonders Chlorid-empfindliche, Membranelektrode, mit einer anionenempfindlichen Membran, welche in einer weichermacherfreien Polymermatrix eingelagert zumindest eine elektroaktive Komponente aufweist, dadurch gekennzeichnet, daß der Anteil an elektroaktiver Komponente in der Membran im Bereich von 50 bis 90 Gewichtsprozent liegt.

2. Membranelektrode nach Anspruch 1, mit PVC als Polymermatrix und Methyltridodecylammoniumchlorid als elektroaktive Komponente, dadurch gekennzeichnet, daß der Anteil an elektroaktiver Komponente in der Membran im Bereich von 60 bis 80 Gewichtsprozent liegt.

**Revendications**

1. Electrode à membrane sensible aux ions et notamment au chlorure dont la membrane particulièrement sensible aux anions est incorporée dans une matrice polymère non plastifiée et possède au moins une composante électroactive; elle est caractérisée par un pourcentage de composante électroactive se situant entre 50 et 90% du poids de la membrane.

2. Electrode à membrane selon demande 1, dotée d'un matrice polymère PVC et d'une composante électroactive de chlorure d'ammonium méthyltridodécylique, caractérisée par un pourcentage de composante électroactive se situant entre 60 et 80% du poids de la membrane.

**Claims**

1. An ion-sensitive, in particular chloride-sensitive, membrane electrode comprising an anion-sensitive membrane, with one or more electroactive components incorporated into an unplasticized polymer matrix, wherein the content of said electroactive component in the membrane is between 50 and 90 percent by weight.

2. A membrane electrode according to claim 1, consisting of PVC as a polymer matrix and methyl-tridodecyl-ammonium chloride as an electroactive component, wherein the content of the electroactive component in the membrane is between 60 and 80 percent by weight.

6